# EUROPEAN PATENT SPECIFICATION

(11) **EP 3 090 877 B1**
(45) Date of publication and mention of the grant of the patent: **28.02.2018**
(21) Application number: 16167612.7
(22) Date of filing: 29.04.2016
(51) Int. Cl.: B41J 13/14, B41J 3/407

(54) **METHOD OF FORMING SUBSTRATE ALIGNMENT TABS ON A PRINT SURFACE**
VERFAHREN ZUR HERSTELLUNG VON SUBSTRATAUSRICHTUNGSLASCHEN AUF EINER DRUCKOBERFLÄCHE
PROCEDE DE FORMATION DE LANGUETTES D'ALIGNEMENT DE SUBSTRAT SUR UNE SURFACE D'IMPRESSION

(30) Priority: 05.05.2015 EP 15166334
(43) Date of publication of application: 09.11.2016
(73) Proprietor: OCE-Technologies B.V., 5914 CA Venlo (NL)
(72) Inventor: MULKENS, Edwin C., 5914 CA Venlo (NL); EDWARDS, Eric J., 5914 CA Venlo (NL)
(74) Representative: OCE IP Department

(56) References cited:
- EP-A1- 2 508 347
- WO-A1-2011/162071
- CN-U- 201 863 477
- GB-A- 2 400 346

## Description

### BACKGROND OF THE INVENTION

### 1. Field of the invention

The present invention relates to a method of forming substrate alignment tabs on a print surface of a printer having an ink jet print head that is capable of relief printing.

### 2. Description of the Related Art

Certain types of ink jet printers, e.g. printers that are operated with UV-curable ink, are capable of forming ink dots in which the ink forms a layer with a non-negligible thickness on the surface of the substrate. Then, by printing a plurality of ink layers one on top of the other, it is possible to form a body of solidified ink that constitutes a relief (relief printing or 2.5D printing) or even a fully three-dimensional structure (3D printing). In order to form such a relief or 3D structure, a substrate is placed on the print surface of the printer, and the ink is deposited on the top surface of the substrate. Of course, it is desired that the ink body is formed in the correct position on the substrate, especially when the substrate is intended to remain a part of the obtained product, i.e. the ink is intended to remain permanently on the substrate. Then, it is necessary to precisely align and position the substrate on the print surface, and the position data must be made available for the print software so that the print head can be controlled to form the ink dots in the correct positions.

The alignment of the substrate on the print surface may be facilitated by forming, on the print surface, alignment tabs which project from the print surface and form stops at which the edge of the substrate may be engaged. For example, the alignment tabs may be formed by pins that project from the print surface in fixed positions and are retractable into the print surface when they are not used. This solution, however, is relatively expensive and has the drawback that the alignment tabs can only be formed in a limited number of fixed positions.

Another possibility is to apply alignment tabs in the form of plastic cards on the print surface by means of double-sided adhesive tape. In that case, however, it is cumbersome to position the alignment tabs on the print surface with sufficient accuracy. GB2400346 shows the use of this kind of alignment means. It is an object of the invention to provide a more accurate and convenient method of forming alignment tabs on the print surface.

In order to achieve this object, according to the invention, the print head is used for printing the tabs directly onto the print surface.

### SUMMARY OF THE INVENTION

The present invention is based on the idea that the alignment tabs themselves can be considered as three-dimensional structures which can be printed with the ink jet print head. However, rather than printing on a substrate, the ink is deposited directly on the print surface of the printer, thus forming a tab in the form of an ink layer that adheres to the print surface. The advantage is that the exact position and shape of the alignment tab is available in the control system and software of the printer because the formation of the tabs has been controlled by the same software. When the printer is to be used for another task and the alignment tabs are not needed anymore or should be replaced by tabs in other positions, the tabs may easily be removed by means of a scraper, such as a razor blade or the like.
Although the invention is particularly useful for 2.5D and 3D printing, it will be understood that the method is not limited to these applications. More generally, the method may be used whenever it is necessary to precisely align a print substrate on a print surface of a printer. Thus, the method may also be used in normal 2D printing, and it is not even necessary that the printed image on the substrate on the one hand and the alignment tabs on the other hand are formed with the same print head.
More specific optional features of the invention are indicated in the dependent claims.

Typically, the ink body forming the alignment tab will be formed of a plurality of ink layers that are printed in subsequent passes of the print head. In case of an ink jet print head is capable of forming ink droplets that have a variable volume, it is preferable for the purpose of obtaining a good adhesion of the alignment tab on the print surface that the first few layers of ink that are printed directly on the print surface are formed by relatively small droplets whereas the upper layers are formed by drops with an increasingly larger volume. For example, the first ten layers of ink may be printed with drops that have a volume of 6 pl. Then, these first ten layers are superposed by about 30 layers that are formed by drops with a larger volume, increasing to a maximum of e.g. 30 pi for the topmost layer or layers.

In a typical example, an individual tab may have a thickness of 1.6 mm (40 layers) and a rectangular shape in plan view, with a width of 5 mm and a length of 20 mm. In general, of course, the tabs may have any desired shape and thickness and they may be formed at arbitrary positions on the print surface.

Typically, the print surface will have fastening means for securely attaching the substrate. For example, such fastening means may be formed by a vacuum box provided underneath the print surface, and vacuum holes that are evenly distributed over the print surface and communicate with the vacuum box, so that the substrate sheet will be fixed by vacuum attraction. In that case, the known positions of the fastening means will also be considered when determining the target positions for the alignment tabs. For example, it will be assured that it is not attempted to print an alignment tab at a position of a suction hole.

Typically, information on the shape of the substrate will also be available in the control system and software of the printer. In that case, the desired position of the substrate and hence the positions of the alignment tabs may also be optimized in relation to the contour of the substrate sheet or even in relation to certain image features to be printed on the substrate. This may help to safely and accurately secure the substrate sheet on the print surface and to obtain a high quality of the printed product.

When the footprint of the intended products to be printed is small in comparison to the total area of the print surface of the printer, it is possible to place a plurality of substrates on the print surface in order to increase the efficiency of the print process. In that case, a suitable control software of the printer may calculate the target positions for the individual substrates in order to be able to accommodate as many substrates as possible on the print surface and to arrange the substrates such that the printed products can be formed most efficiently. Then, based on the calculated target positions of the substrates, the corresponding alignment tabs will be printed in the correct positions automatically.

The alignment tabs may also be adapted for applications where the printed product is obtained in several steps in which the substrate and/or the printed body formed thereon has different orientations.

The invention also encompasses a printer with a control system that is capable of automatically calculating the positions of the print substrates and to form the corresponding alignment tabs, as well as a software product for controlling such a printer.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

Embodiment examples will now be described in conjunction with the drawings, wherein:
- Fig. 1: is a schematic perspective view of a printer to which the invention is applicable.
- Figs. 2 and 3: are cross-sectional views illustrating the formation of a substrate alignment tab on a print surface;
- Fig. 4: is a top plan view of a print surface with alignment tabs and a print substrate aligned thereat;
- Fig. 5: is a top plan view of a print surface with another arrangement of alignment tabs and print substrates;
- Fig. 6: is a sectional view illustrating a first step of a print process for printing a relief;
- Fig. 7: is an exploded sectional view illustrating a process step that follows to the step shown in Fig. 6;
- Fig. 8: is a schematic perspective view of another printer to which the invention is applicable; and
- Fig. 9: is a flow diagram illustrating a control program for the method according to the invention.

### DETAILED DESCRIPTION OF EMBODIMENTS

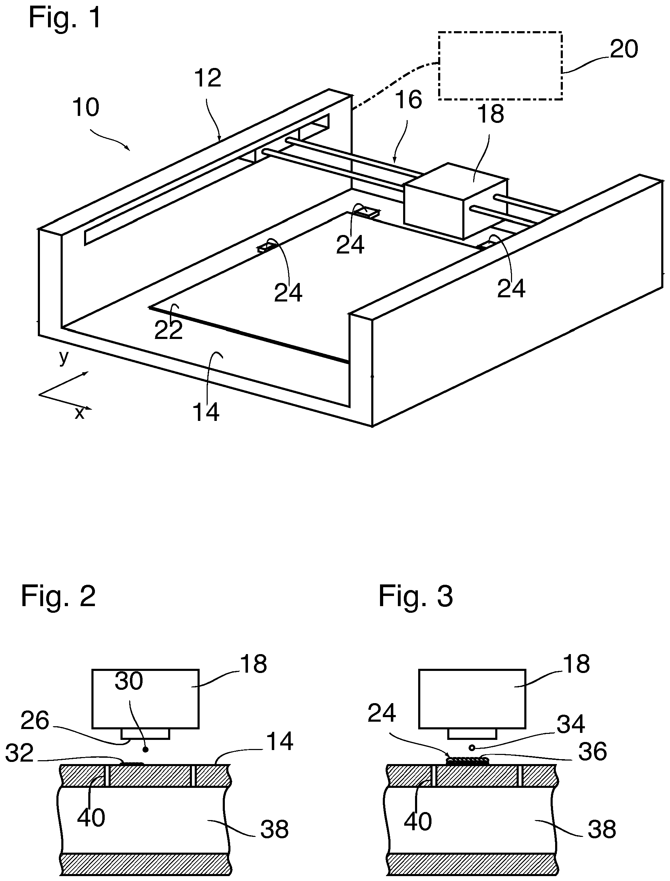

Fig. 1 illustrates a printer 10 having a frame 12 that forms a flat print surface 14. The printer further comprises a carriage 16 arranged to move across the print surface 14 in a sub-scanning direction y, and an ink jet print head 18 guided on the carriage 16 and driven to move relative to the print surface 14 in a main scanning direction x. An electronic control system 20 is connected to the printer 10 for controlling the operations of the printer in accordance with control software that is loaded in the control system.

In the example shown, a substrate 22 in the form of a flat rectangular sheet has been placed on the print surface 14, so that an image, a relief, or a three-dimensional structure may be printed on the substrate 22 by means of the print head 18. One edge of the substrate 22 that extends in the main scanning direction x is aligned at two alignment tabs 24 that project from the print surface, and a third alignment tab 24 is provided for aligning a lateral edge of the substrate 22 that extends in the sub-scanning direction y.

The alignment tabs 24 are formed by bodies of ink, e.g., UV-curable ink, and have been printed directly onto the print surface 14 by means of the ink jet print head 18 under the control of the electronic control system 20. Thus, the exact shapes and positions of the alignment tabs 24 and, consequently, the exact positions of the corresponding edges of the substrate 22 are available in the control system and can be used for controlling the print head 18 such that a desired image or relief or three-dimensional structure will be formed precisely at the desired position on the substrate 22.

Figs. 2 and 3 are simplified diagrams illustrating the process of forming one of the alignment tabs 24. As is shown in Fig. 2, the print head 18 has a nozzle face 26 that faces the print surface 14. The print head has been adjusted in height such that the nozzle face 26 forms a narrow gap with the print surface 14. By controlling the movements of the carriage 16 and the print head 18 in the x-y-plane, the printer has been steered to a position where the alignment mark 24 is to be formed. In Fig. 2, ink droplets 30 with a relatively small volume are ejected from the nozzles of the print head in order to form a first layer 32 of ink dots on the print surface 14. Due to the small volume of the ink droplets 30, a good adhesion of the ink on the material of the print surface 14 (e.g. metal or glass) can be obtained. It will be understood that the print head 18 scans the print surface in the directions x and y so as to form an ink layer with the desired shape of the alignment tab, e.g. a rectangular shape. Then, several layers of ink formed of the small ink droplets 30 are successively formed on top of the first layer.

Subsequently, as has been shown in Fig. 3, the settings of the print head 18 are changed so as to increase the volume of the ink droplets that are ejected from the nozzles. Thus, Fig. 3 shows a larger ink droplet 34 being expelled from the print head, and these droplets form several upper layers 36 of ink that, after curing, firmly adhere to the ink of the lower layers, so that a relatively thick alignment tab 24 can be built up in relatively short time.

In the example shown in Figs. 2 and 3, a vacuum box 38 is formed on the bottom side of the print surface 14, and the print surface is pierced by suction holes 40 that communicate with the vacuum box, so that air is drawn-in in order to firmly attract the substrate 22 to the print surface. The positions of the alignment tabs 24 are controlled such that they not overlap with the suction holes 40.

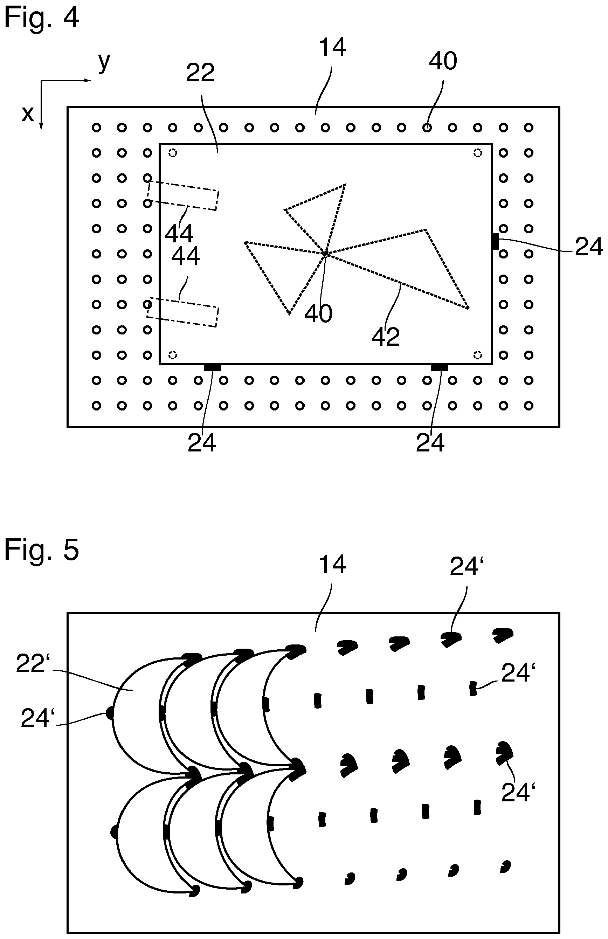

Fig. 4 is a top plan view of a print surface 14 and illustrates an even distribution of the suction holes 40 over the print surface. In this example, the alignment tabs 24 have been positioned such that they not only avoid the suction holes 40 but also position the substrate 22 relative to the raster of the suction holes in order to assure that each corner of the substrate sheet is safely secured by a suction hole, as has been illustrated in dot-dashed lines in Fig. 4.

Since the printing instructions that are supplied to the control system 20 specify also the position of an intended image 42 relative to the substrate, it is also possible to select the positions of the alignment tabs 24 such that a specific feature of the intended image 42 (in this example: the coinciding corners of three triangles) has a specific position relative to the alignment holes. In this example, the feature is placed right on top of an alignment hole. In other examples, the alignment tabs and the substrate may be positioned such that the image feature avoids an alignment hole or any other structure that has been provided for fastening the substrate on the print surface.

The number and positions of the alignment tabs 24 may be selected as desired as long as they determine the intended position for the substrate sheet, taking into consideration also the way in which the substrate is supplied onto the print surface (manually or automatically).

In the example shown in Fig. 4, an automatic sheet feeding mechanism comprises a pair of friction rollers 44 which have been shown in dot-dashed lines and are arranged above the print surface so as to advance the substrate sheet in the sub-scanning direction x. However, the friction rollers are slightly inclined so as to shift the sheet also in the main scanning direction x. In this way, the sheet will be fed over the print surface 14 until its edges abut at the alignment tabs 24.

Fig. 5 illustrates an example where a plurality of crescent-shaped substrates 22' are placed on the print surface 14 for printing a plurality of 3D objects at a time. A control software in the control system 20 has calculated the target positions of the substrates 22' on print surface 14 so as to achieve an arrangement of the substrates as compact as possible in order for the printer to be able to print the three dimensional structures on the substrates 22' with high efficiency. Based on the calculated target positions of the substrates 22', the shapes and positions of alignment tabs 24' are calculated, and the tabs are printed on the print surface.

As has been illustrated in this example, the alignment tabs may have irregular shapes and may have contours that match contour features of the substrates 22', thereby assuring that the substrates can be placed between the alignment tabs 24' only in a unique position. Moreover, as is further illustrated in Fig. 5, a single alignment tab 24 may be arranged to form alignment contours for two or more different substrates, so that the alignment tabs may also serve as spacers between the individual substrates.

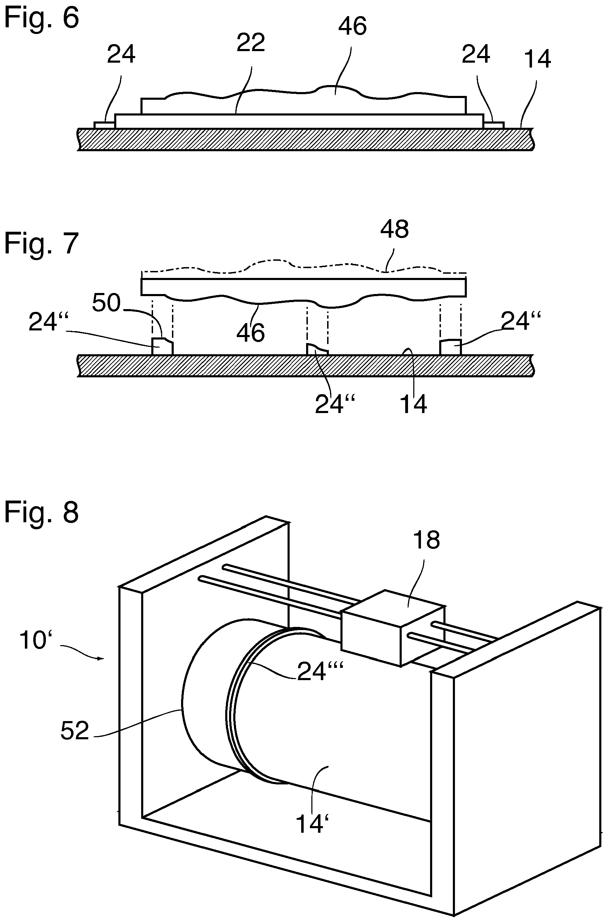

Fig. 6 illustrates an example where the print head, which may be the same as the print head 18 that has been used for forming the alignment tabs 24 on the print surface 14, is used for printing a relief 46 on one surface of a sheet-like substrate 22. In this example, the relief 46 is intended to become a one side of a medal. When the relief 46 has been completed, the ink body forming that relief is removed from the substrate 22 in order to print another relief 48 (Fig. 7) that is to form the opposite side of the medal. the relief 48 is printed on the back side of the ink body that has been detached from the substrate 22. To that end, as is shown in Fig. 7, another type of alignment tabs 24" is printed onto the print surface 14. The alignment tabs 24" are distributed over the area of the ink body that forms the relief 46, and they have top surface contours 50 that match corresponding parts of the relief 46. Thus, the ink body forming the relief 46 can be placed upside down onto the alignment tabs 24", so that this ink body now forms a substrate on the top surface of which the relief 48 will be printed.

The invention is not limited to the case where the print surface 14 is a flat surface. Fig. 8 illustrates an example of a printer 10' which has a platen 52 in the form of a rotary drum, and a print surface 14' is formed by the peripheral surface of the platen. The print substrate, that has not been shown here, will be formed by a flexible sheet that is passed around a portion of the surface of the platen 52 so as to move underneath the print head 18. In order to define an exact lateral position for the substrate on the print surface 14', an alignment tab 24"' in the form of an annular ridge has been printed onto the print surface 14' by means of the print head 18.

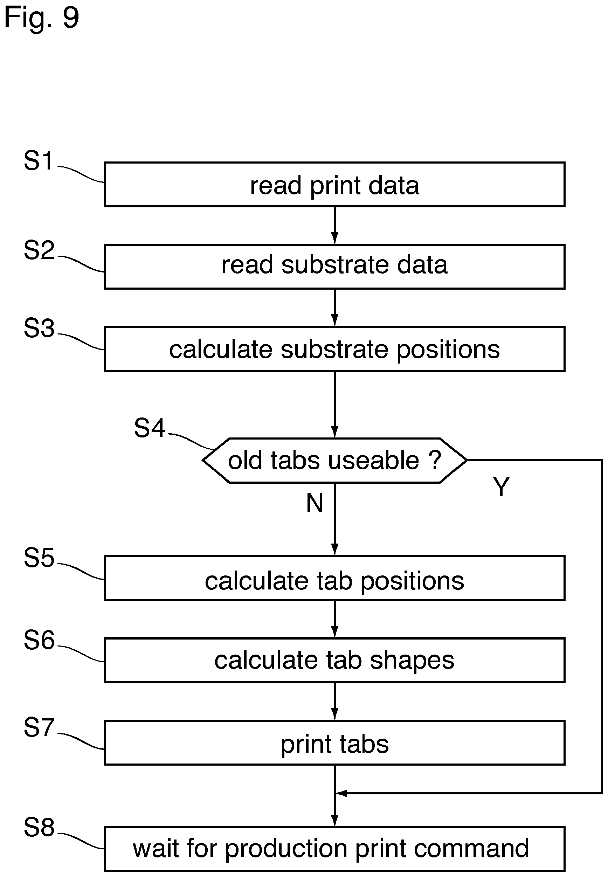

The main steps of a method according to the invention will now be described by reference to a flow diagram shown in Fig. 9.

In step S1, the control system 20 reads print data from a print file which may be supplied online via a network or may be stored on a storage medium such as a memory stick or the like. The print data specify the intended image or 3D object that is to be printed onto the substrate as well as its position relative to the substrate.

In step S2, the control system 20 reads substrate data that specify the material, the thickness and, in particular, the shape and dimensions of the substrate. These substrate data may be entered separately from the print data or may form part of the print data.

In the step S3, the substrate data are used for calculating optimal positions for the substrate or substrates on the print surface. Known positioning algorithms are used for calculating the substrate positions such that the available area of the print surface is used for accommodating as many substrates as possible. This step may include that the different substrates are placed on the print surface in different orientations. Another criterion for finding optimal positions and orientations for the substrates may aim at aligning the objects to be printed on the different substrates such that the movement pattern of the print head 18 in the x-y-plane is optimised.

Then, in step S4, it is checked whether old tabs that may still be present on the print surface and the data of which are still stored in the control system are suitable for aligning the substrates for the new task in the positions that have been calculated in step S3. This step may also include a check whether the tabs have not only the correct positions and shapes but also the correct thickness, because the thickness of the tabs will be adapted to the material and thickness of the respective media sheets. For example, when a relatively thick substrate sheet had been used in the previous job, and, accordingly, relatively thick alignment tabs had been formed on the print surface, and now a substrate sheet is to be used that is much thinner, it may be necessary to adjust the height of the print head 18 in order to prevent the gap between the print surface and the nozzle face from becoming too large. This may involve the risk that the print head in the lowered position collides with the relatively thick alignment tabs. Consequently, the answer in step S4 would by "no", even when the positions and shapes of the old tabs would still be acceptable.

When it is found in step S4 that the old tabs cannot be used any more (N), the user is prompted to remove the tabs with a scraper. Optionally, the printer may have a scraper mechanism for automatically removing the tabs from the print surface.

Then, new tab positions will be calculated in step S5 on the basis of the substrate positions calculated in step S3.

If the substrates have irregular shapes, suitable shapes for the alignment tabs (such as the tabs 24' in Fig. 5) will be calculated in step S6.

In step S7, the new tabs will be printed onto the print surface in step S7, and in step S8 the printer displays a message "ready" and waits for the user to enter a print command.

When it has been found in step S4 that the old tabs are still usable, the steps 5 - S7 are skipped, and step S8 is performed directly after step S4.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A method of forming substrate alignment tabs (24) on a print surface (14) of a printer (10) having an ink jet print head (18) that is capable of relief printing, **characterized in that** the print head (18) is used for printing the tabs (24) directly onto the print surface (14).

2. The method according to claim 1, wherein UV-curable ink is used for printing the tabs (24).

3. The method according to any of the preceding claims, wherein each alignment tab (24) is composed of a plurality of layers (32, 36) of ink.

4. The method according to claim 3, wherein the print head (18) is controlled to eject ink droplets (30, 34) with varying volume, and a lower ink layer (32) adjacent to the print surface (14) is formed by ink droplets (30) with a small volume, whereas at least one superposing ink layer (36) is formed of droplets (34) having a larger volume.

5. The method according to any of the preceding claims, wherein the print surface (14) has fastening structures (40) for securing the substrate (22) on the print surface, and positions for the alignment tabs (24) are calculated on the basis of known positions of the fastening structures (40) before the alignment tabs are printed.

6. The method according to any of the preceding claims, wherein the substrate (20) has a contour with at least one non-linear edge, and at least one alignment tab (24') is formed in a shape having a contour that matches the non-linear edge of the substrate.

7. The method according to any of the preceding claims, wherein alignment tabs (24') for a plurality of substrates (22') are formed on the same print surface (14).

8. The method according to claim 7, wherein at least one alignment tab (24') is shaped to provide alignment contours for at least two adjacent substrates (22').

9. The method according to any of the preceding claims, wherein positions for the tabs (24) are calculated on the basis of a known positional relation between the contour of the substrate (22) and an image (42) to be printed on that substrate.

10. The method according to any of the preceding claims, wherein, when an ink body has been formed on the substrate, alignment tabs (24") are formed on the print surface (14) in positions permitting to place the substrate or the ink body on the print surface in a different orientation.

11. The method according to any of the preceding claims, wherein the substrate has a relief (46) on a side facing the print surface (14), and the alignment tabs (24") have top surface contours (50) matching portions of the relief (46).

12. The method according to any of the preceding claims, wherein alignment tabs (24"') are formed on a print surface (14') that is constituted by a peripheral surface of a drum-shaped platen (52).

13. A printer (10) having an electronic control system (20) adapted to control the printer for performing the method according to any of the preceding claims.

14. A software product stored on a machine-readable medium, comprising program code that, when loaded into an electronic control system (20) of a printer (10), enables the printer to perform the method according to any of the claims 1 to 13.

15. The software product according to claim 14, wherein the program code enables the control system (20) to calculate the positions and/or shapes of the alignment tabs (24).

## Patentansprüche

1. Verfahren zur Herstellung von Substratausrichtnocken (24) auf einer Druckfläche (14) eines Druckers (10), der einen zum Reliefdrucken fähigen Tintenstrahldruckkopf (18) aufweist, **dadurch gekennzeichnet, dass** der Druckkopf (18) dazu benutzt wird, die Nocken (24) direkt auf die Druckfläche (14) zu drucken.

2. Verfahren nach Anspruch 1, bei dem UV-härtende Tinte zum Drucken der Nocken (24) verwendet wird.

3. Verfahren nach einem der vorstehenden Ansprüche, bei dem jeder Ausrichtnocken (24) aus mehreren Lagen (32, 36) von Tinte aufgebaut ist.

4. Verfahren nach Anspruch 3, bei dem der Druckkopf (14) so angesteuert wird, dass er Tintentröpfchen (30, 34) mit variierendem Volumen ausstößt, und eine an die Druckfläche (14) angrenzende Tintenlage (32) durch Tintentröpfchen (30) mit einem kleinen Volumen gebildet wird, während wenigstens eine überlagernde Tintenlage (36) aus Tröpfchen (34) mit einem größeren Volumen gebildet wird.

5. Verfahren nach einem der vorstehenden Ansprüche, bei dem die Druckfläche (14) Befestigungsstrukturen (40) zum Befestigen des Substrats (22) auf der Druckfläche aufweist und Positionen für die Ausrichtnocken (24) auf der Basis von bekannten Positionen der Befestigungsstrukturen (40) berechnet werden, bevor die Ausrichtnocken gedruckt werden.

6. Verfahren nach einem der vorstehenden Ansprüche, bei dem das Substrat (20) eine Kontur mit wenigstens einer nichtlinearen Kante aufweist und wenigstens ein Ausrichtnocken (24') in einer Form gebildet wird, die eine zu der nichtlinearen Kante des Substrats passende Kontur hat.

7. Verfahren nach einem der vorstehenden Ansprüche, bei dem Ausrichtnocken (24') für mehrere Substrate (22') auf derselben Druckfläche (14) gebildet werden.

8. Verfahren nach Anspruch 7, bei dem wenigstens ein Ausrichtnocken (24') so geformt ist, dass er Ausrichtkonturen für wenigstens zwei angrenzende Substrate (22') bildet.

9. Verfahren nach einem der vorstehenden Ansprüche, bei dem Positionen für die Nocken (24) auf der Basis einer bekannten Positionsbeziehung zwischen der Kontur des Substrats (22) und einem auf dieses Substrat zu druckenden Bild (42) berechnet werden.

10. Verfahren nach einem der vorstehenden Ansprüche, bei dem, wenn ein Tintenkörper auf dem Substrat gebildet worden ist, Ausrichtnocken (24') in Positionen auf der Druckfläche (14) gebildet werden, die es erlauben, das Substrat oder den Tintenkörper in einer anderen Orientierung auf der Druckfläche anzuordnen.

11. Verfahren nach einem der vorstehenden Ansprüche, bei dem das Substrat auf einer der Druckfläche (14) zugewandten Seite ein Relief (46) aufweist und die Ausrichtnocken (24") an ihrer oberen Oberfläche Konturen (50) haben, die zu dem Relief (46) passen.

12. Verfahren nach einem der vorstehenden Ansprüche, bei dem Ausrichtnocken (24"') auf einer Druckfläche (14') gebildet werden, die durch eine Umfangsfläche einer trommelförmigen Druckwalze gebildet wird.

13. Drucker mit einem elektronischen Steuersystem (20), das dazu eingerichtet ist, den Drucker für die Ausführung des Verfahrens nach einem der vorstehenden Ansprüche anzusteuern.

14. Softwareprodukt, gespeichert auf einem maschinenlesbaren Medium, mit Programmcode, der, wenn er in ein elektronisches Steuersystem (20) eines Druckers (10) geladen wird, den Drucker in die Lage versetzt, das Verfahren nach einem der Ansprüche 1 bis 13 auszuführen.

15. Softwareprodukt nach Anspruch 14, bei dem der Programmcode das Steuersystem (20) in die Lage versetzt, die Positionen und/oder Formen der Ausrichtnocken (24) zu berechnen.

## Revendications

1. Procédé de formation de pattes d'alignement de substrat (24) sur une surface d'impression (14) d'une imprimante (10) ayant une tête d'impression à jet d'encre (18) qui est susceptible d'imprimer en relief, **caractérisé en ce que** la tête d'impression (18) est utilisée pour imprimer les pattes (24) directement sur la surface d'impression (14).

2. Procédé selon la revendication 1, dans lequel de l'encre durcissable aux UV est utilisée pour imprimer les pattes (24).

3. Procédé selon l'une quelconque des revendications précédentes, dans lequel chaque patte d'alignement (24) est composée d'une pluralité de couches (32, 36) d'encre.

4. Procédé selon la revendication 3, dans lequel la tête d'impression (18) est commandée pour éjecter des gouttelettes d'encre (30, 34) avec un volume variable, et une couche d'encre inférieure (32) adjacente à la surface d'impression (14) est formée par des gouttelettes d'encre (30) ayant un petit volume, tandis qu'au moins une couche d'encre de superposition (36) est formée de gouttelettes (34) ayant un volume plus grand.

5. Procédé selon l'une quelconque des revendications précédentes, dans lequel la surface d'impression (14) a des structures d'attachement (40) pour fixer le substrat (22) sur la surface d'impression, et des positions pour les pattes d'alignement (24) sont calculées sur la base de positions connues des structures d'attachement (40) avant que les pattes d'alignement ne soient imprimées.

6. Procédé selon l'une quelconque des revendications précédentes, dans lequel le substrat (20) a un contour avec au moins un bord non linéaire, et au moins une patte d'alignement (24') est formée en une forme ayant un contour qui correspond au bord non linéaire du substrat.

7. Procédé selon l'une quelconque des revendications précédentes, dans lequel des pattes d'alignement (24') pour une pluralité de substrats (22') sont formées sur la même surface d'impression (14).

8. Procédé selon la revendication 7, dans lequel au moins une patte d'alignement (24') est formée pour fournir des contours d'alignement pour au moins deux substrats adjacents (22').

9. Procédé selon l'une quelconque des revendications précédentes, dans lequel des positions pour les pattes (24) sont calculées sur la base d'une relation positionnelle connue entre le contour du substrat (22) et une image (42) à imprimer sur ce substrat.

10. Procédé selon l'une quelconque des revendications précédentes, dans lequel, quand un corps d'encre a été formé sur le substrat, des pattes d'alignement (24") sont formées sur la surface d'impression (14) dans des positions permettant de placer le substrat ou le corps d'encre sur la surface d'impression dans une orientation différente.

11. Procédé selon l'une quelconque des revendications précédentes, dans lequel le substrat a un relief (46) sur un côté faisant face à la surface d'impression (14), et les pattes d'alignement (24") ont des contours de surface supérieurs (50) correspondant à des portions du relief (46).

12. Procédé selon l'une quelconque des revendications précédentes, dans lequel des pattes d'alignement (24"') sont formées sur une surface d'impression (14') qui est constituée par une surface périphérique d'un cylindre d'impression en forme de tambour (52).

13. Imprimante (10) ayant un système de commande électronique (20) conçu pour commander l'imprimante pour effectuer le procédé selon l'une quelconque des revendications précédentes.

14. Produit logiciel stocké sur un support lisible par ordinateur, comprenant un code de programme qui, lorsqu'il est chargé dans un système de commande électronique (20) d'une imprimante (10), permet à l'imprimante d'effectuer le procédé selon l'une quelconque des revendications 1 à 13.

15. Produit logiciel selon la revendication 14, dans lequel le code de programme permet au système de commande (20) de calculer les positions et/ou les formes des pattes d'alignement (24).
